Europäisches Patentamt

European Patent Office

Office européen des brevets

(19)

(11) Numéro de publication: 0 366 529
A1

(12) DEMANDE DE BREVET EUROPEEN

(21) Numéro de dépôt: 89402899.2

(22) Date de dépôt: 20.10.89

(51) Int. Cl.⁵: G06F 15/62

(30) Priorité: 28.10.88 FR 8814165

(43) Date de publication de la demande:
02.05.90 Bulletin 90/18

(84) Etats contractants désignés:
DE ES GB IT NL

(71) Demandeur: GENERAL ELECTRIC CGR S.A.
100, rue Camille-Desmoulins
F-92130 Issy les Moulineaux(FR)

(72) Inventeur: Feldman, Andréi
Cabinet Ballot-Schmit 7, rue Le Sueur
F-75116 Paris(FR)
Inventeur: Cornuejols, Dominique
Cabinet Ballot-Schmit 7, rue Le Sueur
F-75116 Paris(FR)

(74) Mandataire: Ballot, Paul Denis Jacques et al
Cabinet Ballot-Schmit 7, rue le Sueur
F-75116 Paris(FR)

(54) Procédé et système d'élimination des bruits parasites dans un scanner à rayons X.

(57) Procédé et système d'élimination des bruits parasites dans un scanner à rayons X caractérisé par le fait que l'on calcule la valeur moyenne des signaux des dix premières vues dans un circuit (26). Cette valeur moyenne est soustraite aux signaux de la première vue $V_1$ dans un circuit (27) de manière à obtenir les composantes haute fréquence $H_1$ qui sont considérées comme des bruits parasites. Les signaux $H_1$ sont filtrés dans un filtre passe-haut avant d'être soustraits aux signaux de la vue $V_1$ et obtenir des signaux $V'_1$ exempts de composantes parasites. Les signaux $V'_1$ sont traités dans un circuit séquentiel (31) pour obtenir des signaux $V'_2$ exempts de composantes parasites et ainsi de suite pour les signaux des autres vues $V_3$ à $V_m$.

FIG-2

# PROCEDE ET SYSTEME D'ELIMINATION DES BRUITS PARASITES DANS UN SCANNER A RAYONS X

L'invention concerne les scanners à rayons X et, plus particulièrement, un procédé pour éliminer dans un tel scanner les bruits parasites d'origine microphonique; elle concerne également un système pour mettre en oeuvre ledit procédé.

Pour examiner un patient, on utilise de plus en plus des appareils à rayons X appelés "scanners" qui réalisent des images de coupes transversales du patient. Ces appareils sont basés sur le phénomène physique d'absorption des rayons X par le corps humain. Cette absorption des directement liée à la distance parcourue x des rayons X dans le corps selon la formule :

$$I = I_0 e^{-bx}$$

formule dans laquelle :

$I_0$ est l'intensité du rayonnement entrant dans le corps humain,

$I$ est l'intensité du rayonnement sortant du corps humain,

$b$ est un coefficient d'atténuation qui dépend du corps traversé.

Dans une échelle de mesure logarithmique, l'atténuation $I/I_0$ est égale à $bx$, c'est-à-dire qu'elle est proportionnelle à la distance $x$.

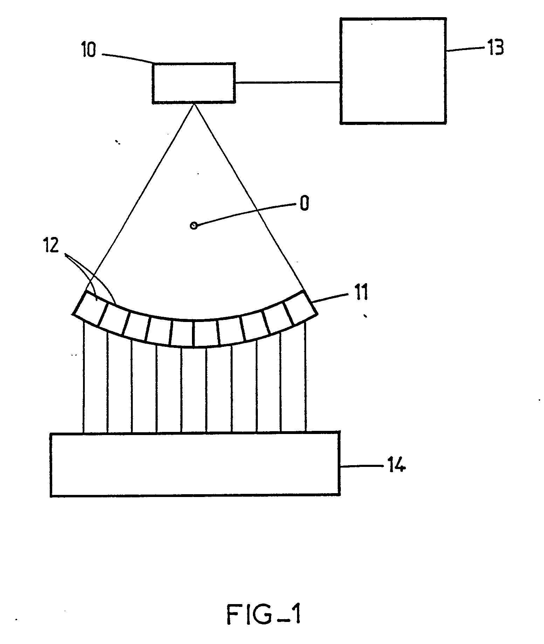

Ces appareils sont constitués essentiellement, comme le montre la figure 1, d'une source de rayons X 10 associée à un dispositif de détection 11, ces deux éléments étant disposés l'un par rapport à l'autre dans une relation géométrique fixe de manière à pouvoir intercaler entre eux le corps à examiner. En outre, ils sont supportés par une structure (non représentée) qui peut tourner autour du corps à examiner de manière à irradier le corps suivant des angles différents. La source à rayons X, qui est commandée par un dispositif 13, émet ses rayons suivant un secteur angulaire qui a une largeur suffisante pour illuminer toute la section transversale du corps. Le dispositif de détection 11 a la forme d'un secteur annulaire dont la longueur est adaptée à la largeur du faisceau de rayons X et est constitué d'un grand nombre de détecteurs élémentaires 12 juxtaposés les uns à côté des autres.

Pour obtenir une image de la section transversale du corps humain traversé par le faisceau de rayons X on fait tourner la structure de support de la source 10 et du dispositif de détection 11 autour du corps et on mesure les signaux de sortie des détecteurs élémentaires 12 pour les traiter de manière appropriée selon des procédés connus afin d'en tirer une image représentative de la section transversale. Pour ce traitement, les détecteurs élémentaires 12, également appelés canaux, sont connectés à un dispositif électronique 14 qui effectue en premier lieu un calcul du logarithme des signaux reçus de manière à obtenir un signal dont l'amplitude est proportionnelle à l'atténuation des rayons X.

Le signal qui est fourni par un détecteur élémentaire est constitué d'un signal utile mélangé à du bruit. Le bruit provient de plusieurs causes, par exemple du détecteur lui-même, des vibrations du scanner...Il en résulte une détérioration du rapport signal/bruit et l'apparition d'artéfacts ou défauts sur l'image élaboré par le dispositif électronique 14 (figure 1) lorsque ces différents bruits ne sont pas suffisamment réduits par une meilleure construction mécanique du scanner ou un traitement électronique approprié du signal utile. Ces solutions mécaniques et électroniques sont difficiles à mettre en oeuvre et conduisent à une augmentation sensible du prix de revient.

Le procédé selon l'invention est basé sur la constatation que, lors de l'examen du corps du patient par le scanner, les signaux des canaux ne doivent pas présenter, d'une vue à la suivante, des différences ayant des composantes haute fréquence; s'il en existe, il faut les détecter de manière à pouvoir les soustraire au signal initial et ainsi obtenir un signal exempt de ces composantes haute fréquence.

L'invention se rapporte à un procédé d'élimination des bruits parasites dans un scanner à rayons X pouvant prendre m vues $V_1$ à Vm et comportant une source de rayons X et un dispositif de détection à N canaux, caractérisé en ce qu'il comprend les opérations suivantes :

- le calcul par canal de la valeur moyenne $\overline{V_p}$ des signaux d'atténuation correspondant aux p premières vues consécutives $V_1$ à $V_p$,

- la soustraction par canal de cette valeur moyenne $\overline{V_p}$ au signal de la vue $V_1$ de manière à obtenir un signal $H_1$ correspondant essentiellement aux composantes haute fréquence du signal de la vue $V_1$, et aux composantes basse fréquence du signal utile,

- le filtrage de ce signal $H_1$ de manière à éliminer les composantes basse fréquence et obtenir un signal $H'_1$,

- la soustraction par canal de ce signal $H'_1$ au signal de la vue $V_1$ de manière à obtenir un signal $V'_1$ exempt de composantes haute fréquence,

- la soustraction par canal de ce signal $V'_1$ au signal de la vue $V_2$ de manière à obtenir un signal $H_2$ correspondant aux composantes haute fréquence du signal de la vue $V_2$, et aux composantes basse fréquence du signal utile,

- la soustraction par canal de ce signal $H_2$ au signal de la vue $V_2$ de manière à obtenir un signal $V'_2$ exempt de composantes haute fréquence, - la réitération séquentielle de ces deux dernières opérations sur les signaux des vues $V_3$ à $V_m$ et $V'_2$ à $V'_{m-1}$

L'invention se rapporte egalement à un système pour mettre en oeuvre le procédé dans un scanner à rayons X dans lequel les N.m codes des m vues sont enregistrées dans une première mémoire, caractérisé en ce qu'il comprend :
- un circuit de calcul de la valeur moyenne $\overline{V_p}$ des signaux sur p vues $V_1$ à $V_p$,
- un circuit de soustraction pour soustraire la valeur moyenne $\overline{V_p}$ au signal de la vue $V_1$ et obtenir le signal $H_1$,
- un filtre pour éliminer les composantes basse fréquence dans le signal $H_1$ et obtenir un signal $H'_1$,
- un deuxième circuit de soustraction pour soustraire le signal $H'_1$ au signal de la vue $V_1$ et obtenir le signal $V'_1$,
- un circuit séquentiel pour traiter successivement les signaux des vues $V_2$ à $V_m$ de manière à leur soustraire respectivement les signaux $V'_1$ à $V'_{m-1}$ et à soustraire ensuite le résultat $H_2$ à $H_m$ de cette soustraction aux signaux des vues $V_2$ à $V_m$, et
- une deuxième mémoire pour enregistrer les signaux $V'_1$ à $V'_m$ fournis par le circuit séquentiel.

D'autres caractéristiques et avantages de la présente invention apparaîtront à la lecture de la description suivante d'un exemple particulier de réalisation, ladite description étant faite en relation avec les dessins joints dans lesquels :

- la figure 1 est un schéma de principe d'un scanner à rayons X tel que décrit dans le préambule, et

- la figure 2 est un schéma fonctionnel d'un système d'élimination des bruits parasites dans un scanner à rayons X selon l'invention.

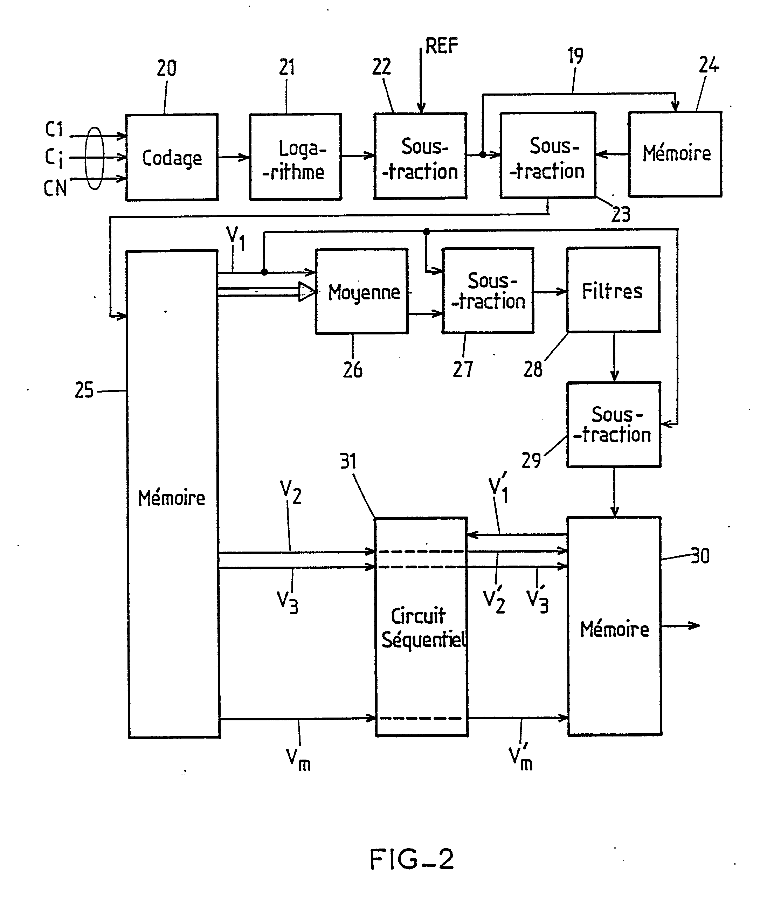

Sur la figure 2, les signaux fournis par les N détecteurs ou canaux $C_1...C_i...C_N$ sont appliqués à un circuit de codage analogique/numérique 20 qui fournit des valeurs numériques ou codes. Ce sont sur ces codes que seront effectuées toutes les opérations qui vont être décrites ci-après, ces opérations pouvant être réalisées par un calculateur convenablement programmé.

· Les N codes résultant d'une mesure à une position élémentaire $\alpha_j$ ou vue sont appliqués à un circuit de calcul de logarithme 21.

Les valeurs logarithmiques sont soustraites dans un circuit 22 à une valeur logarithmique de référence REF fournie par un détecteur appelé moniteur, qui reçoit directement le rayonnement X sans atténuation quelle que soit la position angulaire $\alpha_j$. Ce sont ces N valeurs différentielles, correspondant chacune à un canal, qui donnent les valeurs d'acquisition dans l'air pour une vue. Ces N valeurs sont enregistrées dans la mémoire 24 lors de l'opération d'acquisition par l'intermédiaire de la liaison directe 19. Cette opération est répétée pour chacune des m vues et la valeur obtenue pour chaque canal est additionnée à la précédente pour obtenir une valeur moyenne qui remplace dans la mémoire 24 la valeur moyenne qui résulte des précédentes vues. Après m vues, la mémoire 24 contient N valeurs moyennes, une par canal, qui servent de référence pendant les autres opérations d'étalonnage et pendant les opérations de mesure sur un patient.

Au cours du fonctionnement normal du scanner, c'est-à-dire lorsque le corps d'un patient est mis en place, on effectue une série de m vues et les signaux correspondant à chaque vue sont traités de la manière suivante. Après traitement dans les circuits 20, 21 et 22 comme expliqué précédemment, les N codes d'une vue sont appliqués à un deuxième circuit de soustraction 23 où ils sont soustraits aux N codes de la même vue contenus dans la mémoire 24. Par cette soustraction, on s'affranchit des caractéristiques des détecteurs 12 qui sont différentes d'un détecteur à l'autre. On remarquera que la première soustraction dans le circuit 22 permet de s'affranchir, notamment, des variations d'émission de la source 10.

Les N codes par vue sont enregistrés dans une mémoire 25 qui a une capacité de N.m codes pour enregistrer les signaux correspondant à un tour complet du scanner ou à un demi-tour. Dans un scanner de l'art antérieur, ces N.m codes sont traités selon des algorithmes connus pour obtenir une image d'une section transversale du corps du patient. Avant d'effectuer le traitement dit de reconstruction de l'image, les N.m codes sont traités pour éliminer les bruits parasites haute fréquence en mettant en oeuvre le procédé selon l'invention.

La première opération consiste à effectuer dans un circuit 26 la moyenne par canal des signaux sur plusieurs vues consécutives, par exemple les dix premières $V_1$ à $V_{10}$. Par cette opération, on élimine les signaux parasites haute fréquence et on améliore le rapport signal/bruit par le facteur $\sqrt{10}$. Plus généralement, le nombre de vues sera égal à p et la valeur moyenne sera notée $\overline{V_p}$.

La deuxième opération, réalisée dans un circuit 27, consiste à soustraire cette valeur moyenne $\overline{V_p}$ au signal de la première vue $V_1$. Cette deuxième opération est faite par canal de manière à garder une série de N codes. Cette soustraction élimine les composantes basse fréquence à l'exception de celles correspondant au signal utile, et fait donc apparaître les composantes haute fréquence $H_1$ qui correspondent essentiellement à des signaux parasites.

La troisième opération consiste à éliminer dans un circuit 28 le reste des composantes basse fréquence de manière à isoler les composantes haute fréquence dans un signal $H'_1$.

La quatrième opération consiste à soustraire dans un circuit 29 les composantes haute fréquence $H'_1$ au signal de la première vue $V_1$ de manière à éliminer dans cette dernière les composantes haute fréquence. On obtient ainsi un signal $V'_1$ qui est enregistré dans une mémoire analogue à la mémoire 25. Ce signal $V'_1$ contient le signal utile.

On comprend que les quatre opérations qui viennent d'être décrites sont réalisées sous forme numérique et que, en conséquence, le signal $V'_1$ est enregistré dans la mémoire 30 sous la forme de N codes.

Les opérations suivantes s'effectuent par l'intermédiaire d'un circuit 31 qui reçoit successivement d'une part, les N codes de chacune des vues $V_2$ à $V_m$ en provenance de la mémoire 25 et, d'autre part, les N codes de chacun des signaux $V'_1$ à $V'_{m-1}$ enregistrés dans la mémoire 25 et qui résultent du traitement effectué dans le circuit 31, sauf en ce qui concerne les N codes de la vue $V'_1$.

Le circuit 31 effectue séquentiellement les opérations suivantes :
- la soustraction de $V'_1$ à $V_2$ de manière à faire apparaître les composantes haute fréquence $H_2$ du signal $V_2$,
- la soustraction de $H_2$ à $V_2$ de manière à éliminer les composantes haute fréquence dans le signal $V_2$, et
- l'enregistrement du signal résultant $V'_2$ dans la mémoire 30.

Les opérations ci-dessus sont répétées pour la vue suivante $V_3$ à laquelle on soustrait $V'_2$, et ainsi de suite pour les vues suivantes jusqu'à la vue $V_m$.

En résumé, les différentes opérations du procédé sont les suivantes :
- le calcul par canal de la valeur moyenne $V_p$ des signaux correspondant aux p premières vues consécutives $V_1$ à $V_p$,
- la soustraction par canal de cette valeur moyenne $V_p$ au signal de la vue $V_1$ de manière à obtenir un signal $H_1$ correspondant essentiellement aux composants haute fréquence du signal $V_1$,
- le filtrage de ce signal $H_1$ de manière à éliminer les composantes basse fréquence et obtenir un signal $H'_1$,
- la soustraction par canal de ce signal $H'_1$ au signal $V_1$ de manière à obtenir un signal $V'_1$ exempt de composantes haute fréquence,
- la soustraction par canal de ce signal $V'_1$ au signal $V_2$ de manière à obtenir un signal $H_2$ correspondant aux composantes haute fréquence du signal $V_2$,
- la soustraction par canal de ce signal $H_2$ au signal $V_2$ de manière à obtenir un signal $V'_2$ exempt de composantes haute fréquence,
- la réitération séquentielle de ces deux dernières opérations sur les signaux $V_3$ à $V_m$ et $V'_2$ à $V'_{m-1}$, respectivement.

Le système a été décrit en utilisant deux mémoires 25 et 30 mais on comprend qu'elles peuvent être une seule et même mémoire.

**Revendications**

1. Procédé d'élimination des bruits parasites dans un scanner à rayons X pouvant prendre m vues $V_1$ à $V_m$ et comportant une source de rayons X et un dispositif de détection à N canaux, caractérisé en ce qu'il comprend les opérations suivantes :
- le calcul par canal de la valeur moyenne $\overline{V_p}$ des signaux correspondant aux p premières vues consécutives $V_1$ à $V_p$,
- la soustraction par canal de cette valeur moyenne $\overline{V_p}$ au signal de la vue $V_1$ de manière à obtenir un signal $H_1$ correspondant essentiellement aux composants haute fréquence du signal de la vue $V_1$,
- le filtrage de ce signal $H_1$ de manière à éliminer les composantes basse fréquence et obtenir un signal $H'_1$,
- la soustraction par canal de ce signal $H'_1$ au signal de la vue $V_1$ de manière à obtenir un signal $V'_1$ exempt de composantes haute fréquence,
- la soustraction par canal de ce signal $V'_1$ au signal de la vue $V_2$ de manière à obtenir un signal $H_2$ correspondant aux composantes haute fréquence du signal de la vue $V_2$,
- la soustraction par canal de ce signal $H_2$ au signal $V_2$ de la vue de manière à obtenir un signal $V'_2$ exempt de composantes haute fréquence,
- la réitération séquentielle de ces deux dernières opérations sur les signaux des vues $V_3$ à $V_m$ et les signaux $V'_2$ à $V'_{m-1}$

2. Système pour mettre en oeuvre le procédé dans un scanner à rayons X dans lequel les N.m codes des m vues sont enregistrées dans une première mémoire (25), caractérisé en ce qu'il comprend :
- un circuit de calcul (26) de la valeur moyenne $\overline{V_p}$ des signaux sur p vues $V_1$ à $V_p$,
- un circuit de soustraction (27) pour soustraire la valeur moyenne $\overline{V_p}$ au signal de la vue $V_1$ et obtenir le signal $H_1$,
- un filtre (29) pour éliminer les composantes basse fréquence dans le signal $H_1$ et obtenir un signal $H'_1$,
- un deuxième circuit de soustraction (29) pour soustraire le signal $H'_1$ au signal de la vue $V_1$ et obtenir le signal $V'_1$,
- un circuit séquentiel (31) pour traiter successivement les signaux des vues $V_2$ à $V_m$ de manière à leur soustraire respectivement les signaux $V'_1$ à $V'_{m-1}$ et à soustraire ensuite le résultat $H_2$ à $H_m$ de cette soustraction aux signaux des vues $V_2$ à $V_m$ respectivement, et
- une deuxième mémoire pour enregistrer les si-

gnaux V$'_1$ à V$'_m$ fournis par le circuit séquentiel.

3. Système selon la revendication 1, caractérisé en ce que les première (25) et deuxième mémoires (30) constituent une seule et même mémoire.

FIG_1

FIG_2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | FR-A-2 368 760 (N.V. PHILIPS' GLOEILAMPENFABRIEKEN) <br> * Page 7, ligne 19 - page 8, ligne 12; revendications 1,4,5 * <br> --- | 1-3 | G 06 F  15/62 |
| A | IEEE TRANSACTIONS ON NUCLEAR SCIENCE, vol. NS-25, no. 5, octobre 1978, pages 1111-1116, IEEE, New York US; G. KOWALSKI: "Suppression of ring artefacts in CT fan-beam scanners" <br> * Page 1112; page 1113, colonne 1 * <br> ----- | 1 | |

**DOMAINES TECHNIQUES RECHERCHES (Int. Cl.5)**

G 06 F

Le présent rapport a été établi pour toutes les revendications

| Lieu de la recherche | Date d'achèvement de la recherche | Examinateur |
|---|---|---|
| LA HAYE | 01-12-1989 | PFITZINGER E.E. |